# EUROPEAN PATENT APPLICATION

(11) **EP 1 555 592 A2**
(43) Date of publication of application: **20.07.2005**
(21) Application number: 05100014.9
(22) Date of filing: 04.01.2005
(51) Int. Cl.: G06F 1/00

(54) **Contents data management apparatus**

(30) Priority: 13.01.2004 JP 2004005194; 13.01.2004 JP 2004005195
(71) Applicant: YAMAHA CORPORATION, Hamamatsu-shi, Shizuoka-ken 430-8650 (JP)
(72) Inventor: Okamoto, Tetsuo, Hamamatsu-shi, Shizuoka 430-8650 (JP)
(74) Representative: Kehl, Günther

(57) **Abstract**

A contents data management apparatus comprises a memory that stores contents data, an encrypting device that encrypts the contents data, a first transmitter that transmits encrypted contents data to other contents data management apparatus, a requesting device that requests a check-out permission of the contents data to a server, a receiver that receives the check-out permission from the server, and a second transmitter that transmits information for decrypting the encrypted contents data to the other contents management apparatus when the receiver receives the check-out permission.

## Description

### CROSS REFERENCE TO RELATED APPLICATION

This application is based on Japanese Patent Application 2004-005194, filed on January 13, 2004 and Japanese Patent Application 2004-005195, filed on January 13, 2004, the entire contents of which are incorporated herein by reference.

### BACKGROUND OF THE INVENTION

### A) FIELD OF THE INVENTION

This invention relates to a contents data management apparatus, and more in detail, is related to security at a time of check-out and check-in for the contents data between a plurality of the contents data managing apparatus.

### B) DESCRIPTION OF THE RELATED ART

Conventionally, a contents data managing apparatus that can transmits contents data downloaded from a server, etc. to a connected external device is well known. In such apparatus, a process to make the contents data be in a usable state in the external device is called check-out. Conversely, a process to delete the contents data from the external device to invalidate the usage of the contents data is called check-in.

In the conventional contents data management apparatus, in order to avoid an illegal duplication of the contents data, a permissible number of check-out is limited, and the permissible number of check-out is managed in the contents data management apparatus consisted of a user's computer, etc.

Also, other than managing the permissible number of check-out (a permissible check-out count), for example, ID information of using device of the contents data is embedded to the contents data in advance, and a technique for permitting a usage of the contents data only with the using device in which the ID information is embedded has been suggested (for example, refer to Japanese Patent Application Laid-Open No. 2003-271766).

Conventionally, when the contents data stored in the contents data management apparatus consisted of a computer, etc. is transmitted to an external device connected to the contents data management apparatus, a number of transmissions (check-out and check-in) is managed in the contents data management apparatus. Since increase and decrease of the number of transmissions is depending on management in the contents data management apparatus, a bender of the contents data cannot change the restriction imposed on the contents data in the later occasion. Also, the number of transmission can be changed illegally.

Moreover, in a case of the conventional technique, there is possibility that a plurality of the contents data are duplicated by illegally transmitting the contents data to other external device. Especially, security management such as prevention of illegal copy at a time of transmission for the contents data using automatic performance data based on the MIDI standards is difficult.

Also, in the apparatus permitting the usage of the contents data only in the using apparatus to which the above-described ID information is embedded, an electronic musical instrument obtained after purchasing the contents data cannot be used for reproducing the purchased contents data.

### SUMMARY OF THE INVENTION

It is an object of the present invention to provide a contents data management apparatus that can reserve security at a time of check-in of the contents data between a plurality of the contents data management apparatus.

Also, it is an object of the present invention to provide a contents data management apparatus that can certainly manage the contents data checked in between a plurality of contents data management apparatus.

Further, It is a still another object of the present invention to provide a contents data management apparatus that can reserve security at a time of check-in and check-out of the contents data between a plurality of the contents data management apparatus.

Moreover, it is a further object of the present invention to provide a contents data management apparatus that can certainly manage the contents data checked in and out between a plurality of contents data management apparatus.

According to one aspect of the present invention, there is provided a contents data management apparatus, comprising: a memory that stores contents data; an encrypting device that encrypts the contents data; a first transmitter that transmits encrypted contents data to other contents data management apparatus; a requesting device that requests a check-out permission of the contents data to a server; a receiver that receives the check-out permission from the server; and a second transmitter that transmits information for decrypting the encrypted contents data to the other contents management apparatus when the receiver receives the check-out permission.

According to another aspect of the present invention, there is provided a contents data management apparatus, comprising: a receiver that receives a check-out permission request for contents data from other contents data management apparatus; a judgment device that judges whether usage permission of the contents data can be granted or not in accordance with check-out permission judgment data; a transmitter that transmits the check-out permission for the contents data to the other contents data management apparatus when the judgment device judges the usage permission of the contents data can be granted; and a manager that updates the check-out permission judgment data when the transmitter transmits the check-out permission.

According to still another aspect of the present invention, there is provided a contents data management system formed by communicably connecting a first contents data management apparatus and a second contents data management apparatus, the system comprising: the first contents data management apparatus comprising a first memory that stores contents data, an encrypting device that encrypts the contents data, a first transmitter that transmits encrypted contents data to the second contents data management apparatus, a requesting device that requests a check-out permission of the contents data to a server, a receiver that receives the check-out permission from the server, and a second transmitter that transmits information for decrypting the encrypted contents data to the second contents management apparatus when the receiver receives the check-out permission; and the second contents data management apparatus comprising a third receiver that receives the encrypted contents data; a second memory that stores the received encrypted contents data, a fourth receiver that receives the information for decrypting the encrypted contents data, a decrypting device that decrypts the stored encrypted contents data by using the received information for decrypting the encrypted contents data.

According to further aspect of the present invention, there is provided a contents data management apparatus, comprising: a transmitter that transmits encryption information for encrypting contents data identification information of contents data stored in other contents management apparatus to the other contents management apparatus; a first receiver that receives contents data identification information encrypted by using the transmitted encryption information from the other contents data management apparatus; an decrypting device that decrypts the received encrypted contents data identification information by using the transmitted encryption information; and a requesting device that transmits a check-in permission and information for specifying the contents data in accordance with the decrypted contents data identification information to a server.

According to further aspect of the present invention, there is provided a contents data management apparatus, comprising: a memory that stores contents data including contents data identification information; a receiver that receives encryption information for encrypting the contents data identification information from other contents management apparatus; an encrypting device that encrypts the contents data identification information by using the received encryption information; a transmitter that transmits the encrypted contents data identification information to the other contents management apparatus; and a controller that deletes or restricts a usage of the contents data corresponding to the encrypted contents data identification information after completion of the transmission of the encrypted contents data identification information.

According to further aspect of the present invention, there is provided a contents data management apparatus, comprising: a receiver that receives contents data identification information and a check-in permission request for contents data corresponding to the contents data identification information from other contents data management apparatus; a judgment device that judges whether check-in of the contents data corresponding to the contents data identification information can be permitted or not; and a transmitter that transmits a check-in permission to the other contents data management apparatus when the check-in of the contents data corresponding to the contents data identification information is judged to be permitted.

According to the present invention, it is provided that a contents data management apparatus that can reserve security at a time of check-in of the contents data between a plurality of the contents data management apparatus.

Also, according to the present invention, it is provided that a contents data management apparatus that can certainly manage the contents data to be checked in between a plurality of contents management apparatus.

According to the present invention, it is provided that a contents data management apparatus that can reserve security at a time of check-out and check-in of the contents data between a plurality of the contents data management apparatus.

Also, according to the present invention, it is provided that a contents data management apparatus that can certainly manage the contents data to be checked out and checked in between a plurality of contents management apparatus.

### BRIEF DESCRIPTION OF THE DRAWINGS

FIG. 1 is a schematic view showing a check-out of contents data according to an embodiment of the present invention.
FIG. 2 is a schematic view showing a check-in of the contents data according to the embodiment of the present invention.
FIG. 3 is a block diagram showing hardware structure of a server 5, a computer (PC) 1, an electronic musical instrument 4 and the like which consist the contents data management apparatus according to the embodiment of the present invention.
FIG. 4 is a schematic view showing data contents of an external storage device (HDD) 15 of the server 5 shown in FIG. 3.
FIG. 5 is a schematic view showing data contents of the external storage device (HDD) 15 of the computer 1 shown in FIG. 3.
FIG. 6 is a flowchart showing a check-out process according to the embodiment of the present invention.
FIG. 7 is a flowchart showing a check-in process according to the embodiment of the present invention.

### DETAILED DESCRIPTION OF THE PREFERRED EMBODIMENTS

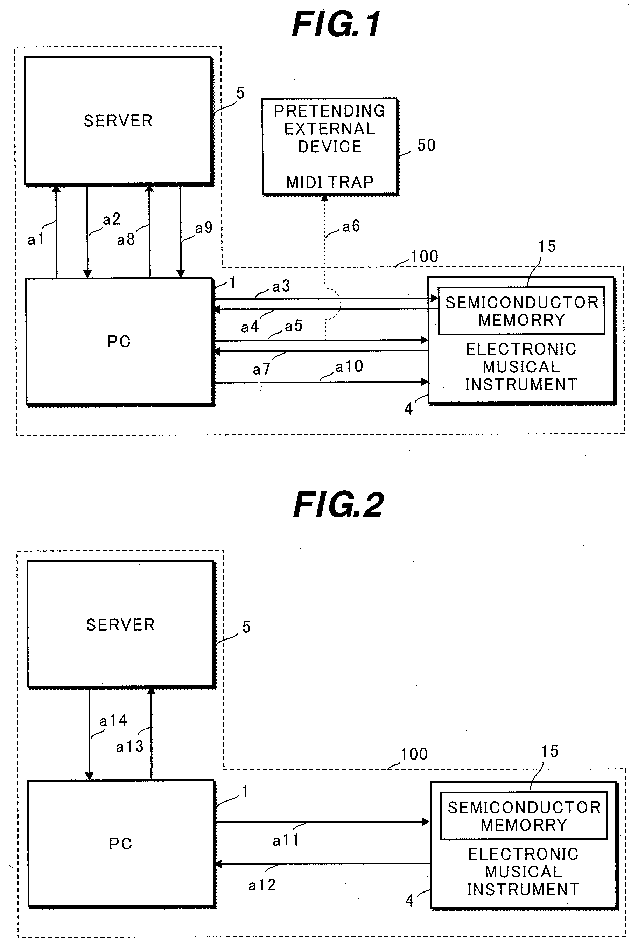

FIG. 1 is a schematic view showing a check-out of contents data according to an embodiment of the present invention. In the drawing, data flows are indicated with arrows a1 to a10.

A contents data management system 100 is consisted of a plurality of contents data management apparatuses, and, for example, each contents data management apparatus is consisted of a server 5, a computer (PC) 1, an electronic musical instrument 4 or the like. The server 5 is an apparatus on a contents data supplier's side, and the computer 1 and the electronic musical instrument 4 are apparatuses on users' (contents users') side. The server 5 and the computer 1 are connected, for example, with a communication network 3 (FIG. 2) such as the Internet, etc. Also, the computer 1 and the electronic musical instrument 4 are connected, for example, with a USB interface, etc. Moreover, it is preferable that the communication between the server 5 and the computer 1 is processed by using an encrypted communication technique such as the Secure Socket Layer (SSL).

The server 5 stores a plurality of the contents data and management information for each contents data, and manages contents data user (purchaser) information (hereinafter called the user information). The user information includes at least user ID, a user password, information about the contents data of which the user has a usage right (including at least the contents ID and a restriction of a number of transmission times). Moreover, details of the information stored in the server 5 are described later.

The computer 1 stores at least a part of the user information and downloads the contents data from the server 5 by using the user information and stores the downloaded contents data. Also, the computer 1 can transmit (check-out or check-in) the stored contents data to the electronic musical instrument 4 to be connected.

The electronic musical instrument 4 can reproduce at least a part of the contents data or downsized contents data, and has storing means such as a semiconductor memory 15 that can store the contents data. The electronic musical instrument 4 stores the contents data transmitted from the computer 1 in the semiconductor memory 15, and the user can use the contents data stored in the semiconductor memory 15. The contents data is data including at least one of real data consisted of MIDI data (MIDI), audio data (AUDIO), video data (VIDEO), still image data, musical score data or other data, and it is consisted including the contents ID for identifying the contents data and contents management information imposing restriction on usability (complete invalidation of the usage, permitting reproduction for some of the way, permitting displaying but prohibiting printing, etc.) of the real data. Moreover, downsizing in this specification is, for example, a conversion process for making available to use the contents data at the electronic musical instrument side.

A check-out flow of the contents data according to the embodiment of the present invention will be explained. In this specification, the check-out of the contents data indicates a process to count up a permissible number of the check-out wherein the contents data on which at least a restriction (an upper limit of the permissible number of check-out) is imposed is transmitted from the computer 1 to the electronic musical instrument. Also, the check-in indicates a process to count up a permissible number of the check-out wherein the contents data on which a limit of the permissible transmission times is imposed is deleted from the electronic musical instrument 4 (for example, from the semiconductor memory 15) or restriction for using the contents data is added.

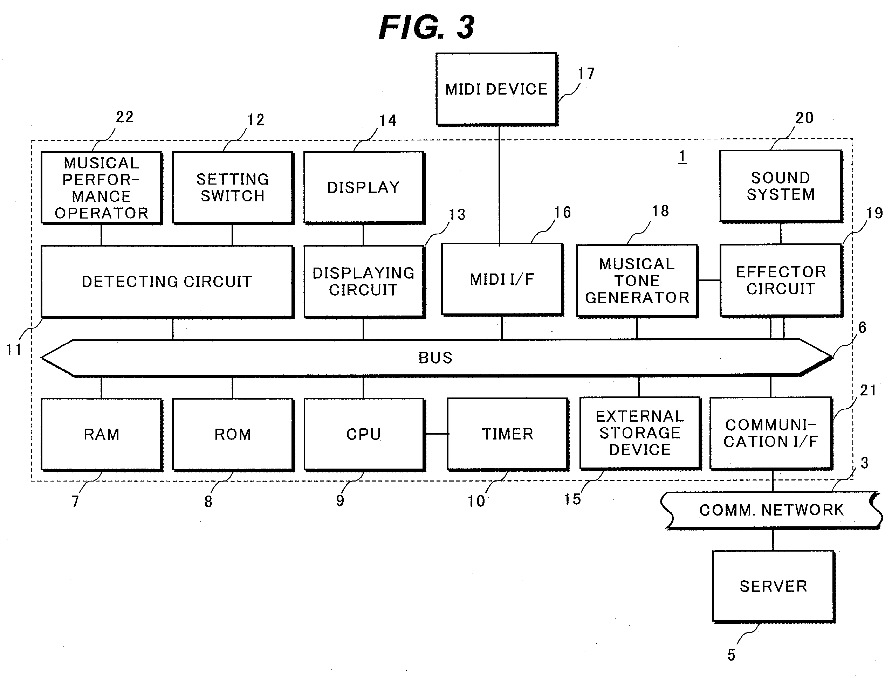

First, as a preparation stage of the check-out process according to the embodiment of the present invention, the user expresses his intention to purchase the contents data (request for downloading the contents data) to the server 5 by using the computer 1 as indicated with an arrow a1. Next, as indicated with an arrow a2, the server 5 provides the contents data requested by the user in accordance with the downloading request by, for example, adding a restriction for permissible transmission times. The computer 1 stores the provided contents data in the external storage device 15 (FIG. 3) or the like.

The next process is an actual check-out process. When the user selects contents data which the user wants to check-out to the electronic musical instrument 4, as indicated with an arrow a3, the computer 1 requests media ID that is a unique identification information of the semiconductor memory 15 to the electronic musical instrument 4. In the electronic musical instrument 4, as indicated with an arrow a4, the media ID of the semiconductor memory 15 is transmitted to the computer 1 in accordance with the request of the media ID.

Then, the computer 1 converts the contents data to a form that the electronic musical instrument 4 can use, for example, the computer 1 generates an encryption key combining information such as the time data that is generated by own device with the received media ID, and as indicated with an arrow a5, encrypts the converted contents data by encryption means and transmits it to the electronic musical instrument 4 by transmitting means. At this time, as indicated with an arrow a6, however, there is a case that a pretending external device 50 receives the encrypted contents data by a MIDI trap simultaneously with the electronic musical instrument 4, the contents data cannot be used at the external device 50 because the contents data is encrypted.

After that, when the computer 1 receives a report that the contents data is normally received from the electronic musical instrument 4 as indicated with an arrow a7, the computer 1 requests check-out permission of the contents data by requesting means as indicated with an arrow a8. In the server 5, in accordance with the request for check-out permission received by check-out permission request receiving means, judging means judges whether the check-out permission can be granted or not, that is, this time of check-out of the contents data is within a limit number of check-out or not. If it is within the limit, the permissible check-out times of the contents is counted down by management means, and check-out permission is transmitted by check-out permission transmitting means as indicated with an arrow a9.

When the computer 1 receives the check-out permission by the receiving means, as indicated with an arrow a10, information generated by its own device such as the time data used for generating the encryption key of the contents data is transmitted to the electronic musical instrument 4 by decryption information transmitting means. The electronic musical instrument 4 receives the information by decryption information receiving means, generates a decryption key (the same key data as the encryption key used for encrypting the contents data) by combining it with the media ID of the semiconductor memory 15 and decrypts the encrypted contents stored in the semiconductor memory (storing means) 15 by decryption means.

FIG. 2 is a schematic view showing the check-in of the contents data according to the embodiment of the present invention. In the drawing, data flows are indicated with arrows a11 to a14. Moreover, the contents data management system 100 is same as one shown in FIG. 1, and the explanation is omitted by giving the same reference numbers as in FIG. 1. The check-in flow of the contents data will be explained below.

When a user directs the check-in of the contents data, as indicated with an arrow a11, information for selecting the contents data from the computer 1 and information (for example, random numbers or the like) for encrypting the contents ID of the contents data to be selected are transmitted to the electronic musical instrument 4.

In the electronic musical instrument 4, the contents data to be checked-in is selected, and the contents ID of the selected contents data is encrypted by identification encryption means with using the random numbers as an encryption key for encrypting the contents ID of the contents data received by encryption information receiving means. Thereafter, the encrypted contents ID is transmit to the computer 1 by identification information transmitting means as indicated by an arrow a12. The contents data to be checked-in stored in the semiconductor memory 15 may be deleted from the semiconductor memory 15 by controlling means at this time. Also, the usage of the contents data may be prohibited, restricted to permit the reproduction of the contents data only for some of the way by the controlling means instead of deleting the contents data from the semiconductor memory 15. Moreover, the controlling means may impose other restriction on the contents data such as permitting display but prohibiting printing instead of deleting.

The deletion of the contents data or imposing the usage restriction on the contents data may be executed after confirming that the encrypted contents ID is normally transmitted to the computer 1 (no transmission error is detected or a reception signal is received from the computer 1). Moreover, when the computer 1 and the server 5 are not connected, the process may not be executed.

When the computer 1 receives the encrypted contents ID from the electronic musical instrument 4 by identification information receiving means, identification decrypting means decrypts the contents ID by using the random numbers which had been transmitted to the electronic musical instrument 4 before, and check-in permit requesting means transmits the decrypted contents ID together with a check-in permit request to the server 5 as indicated with an arrow a13. Moreover, instead of transmitting the decrypted contents ID, the decrypted contents ID may be converted into other format before the transmission, or other related information corresponding to the contents may be transmitted instead of transmitting the decrypted contents ID.

The server 5 counts up the permissible number of check-out of the contents data in accordance with the received contents ID, the permissible number of check-out after count-up and check-in permission are transmitted to the computer 1 by check-in permission transmitting means. In the computer 1, the new permissible number of check-out is displayed and a number of a permissible transmission may be informed to the user.

FIG. 3 is a block diagram showing hardware structure of the server 5, the computer (PC) 1, the electronic musical instrument 4, etc. which can be used as the contents data management apparatus according to the embodiment of the present invention. Moreover, in a case of the computer (PC) 1, a MIDI device 17 in the drawing corresponds to the electronic musical instrument 4. In this case, the computer 1 and the electronic musical instrument 4 are connected with a MIDI cable, a USB cable or the like via the MIDI interface 16, etc. Also, in a case of the electronic musical instrument 4, the communication interface (for example, a communication interface 21) other than the communication interface (for example, the MIDI interface 16) for the connection with the computer 1 may be omitted.

The contents data management apparatus is consisted of a bus 6, a RAM 7, a ROM 8, a CPU 9, a timer 10, a detector 11, a setting switch 12, a musical performance switch 22, a display circuit 13, a display 14, an external storage device 15, a MIDI interface 16, a musical tone generator 18, an effecter 19, a sound system 20 and a communication interface (I/F) 21.

The RAM 7, the ROM 8, the CPU 9, the external storage device 15, the detector 11, the display circuit 13, the MIDI interface 16, the musical tone generator 18, the effecter 19 and the communication interface (I/F) 21 are connected to the bus 6.

The RAM 7 has a working area of the CPU 9 and a buffer area and stores a flag, a register and various parameters.

The various parameters and a control program or programs for realizing the embodiment of the present invention can be stored in the ROM 8. In this case, it is not necessary to duplicatedly store the program in the external storage device 15. Also, when the contents data management apparatus is the electronic musical instrument 4, a unique device unique key (device ID information) may be stored in the ROM 8.

The CPU executes calculation or controls in accordance with the control program stored in the ROM 8 or the external storage device 15. The timer 10 is connected with the CPU 9 and supplies a standard clock signal and an interrupt timing to the CPU 9.

The user can input various parameters and make settings by using a setting switch 12 connected to the detector 11. The setting switch 12 may be formed of anything that can output signals corresponding to the user's input, for example, a switch, a pad, a fader, a slider, an alphanumerical keyboard, a mouse, a rotary encoder, a joy-stick, a jog-dial and the like. Also, the setting switch 12 may be formed of a software switch that is displayed on the display 14 and operated by using other switch such as a mouse.

The musical performance switch 22 is connected to the detector 11 and supplies musical performance information in accordance with musical performance of the user. A keyboard for musical performance, a pad and the like can be used as the performance switch 22. Moreover, the performance switch 22 is not limited to the above, it may be anything with which the user can input musical performance information. Further, this musical performance switch 22 can be omitted.

The display circuit 13 is connected to the display 14 and can display various information on the display 14. In addition to display various parameters, the display 14 can display information or contents included in the contents data such as a musical score, a musical performance guide, etc. The user executes various input operations and settings with reference to the information displayed on the display 14, and executes the musical performance operation with reference to various types of musical performance guides, musical scores, etc.

The external storage device 15 includes an interface for the external storage device and is connected to the bus 6 via the interface. The external storage device 15 is, for example, a flexible disk or a floppy (trademark) disk drive (FDD), a hard disk drive (HDD), a magneto-optical disk (MO) drive, a CD-ROM (compact disk read only memory) drive, a DVD (digital versatile disc) drive, a semiconductor memory, etc.

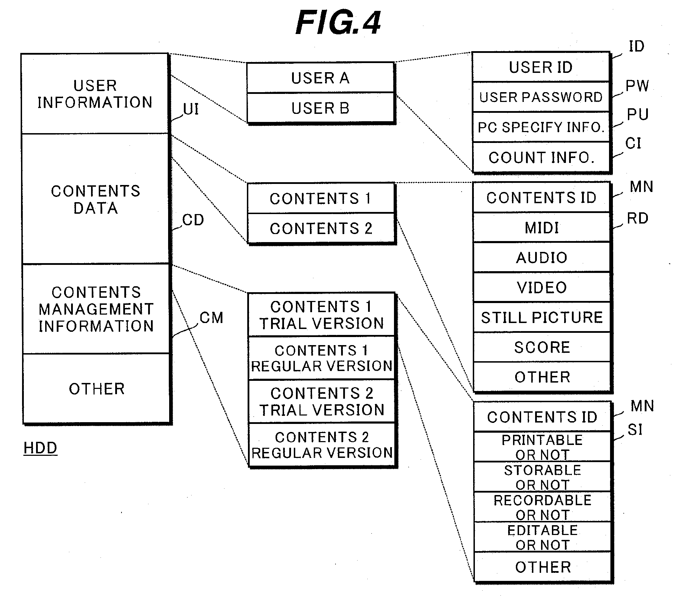

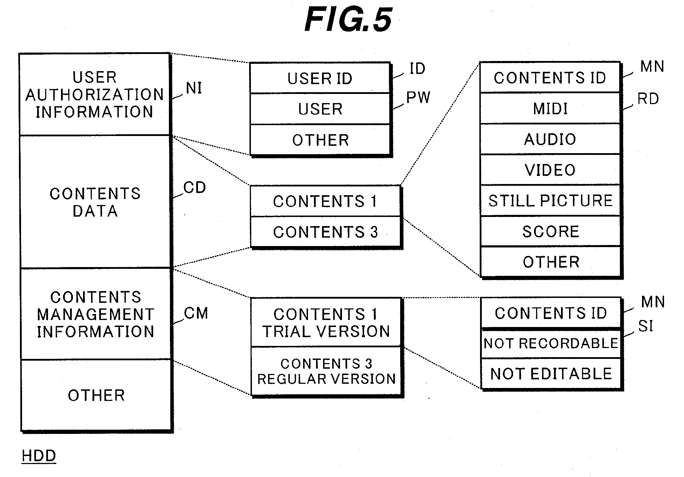

Moreover, contents (data) stored in the external storage device 15 (e.g., HDD) of the server 5 and the computer 1 is explained later wothj reference to FIG. 4 and FIG. 5. Also, in a case of the electronic musical instrument 4, a semiconductor memory such as a smart media (trademark), etc. is connected as the external storage device 15, and each semiconductor memory 15 stores a unique media ID.

When the hard disk drive (HDD) is connected as the external storage device 15, the control program or the programs for realizing the embodiment of the present invention can also be stored in the hard disk (HDD) in the external storage device 15. By reading the control program from the hard disk to the RAM 7, the CPU 9 can execute the same operation as in the case that the control program is stored in the ROM 8. By doing this, addition and version-up of the control program can be easily performed.

In addition to the hard disk drive, when the CD-ROM is connected, the control program and the programs for realizing the embodiment of the present invention can be stored also in the CD-ROM. The programs for realizing the embodiment of the present invention can also be installed from the CD-ROM to the hard disk. A new install and version-up of the control program can easily be performed.

The MIDI interface (MIDI I/F) 16 can be connected to the MIDI device 17, other electronic musical instrument, an audio-visual device, the computer, etc. and can at least transmit and receive a MIDI signal. The MIDI interface 16 is not limited to the dedicated MIDI interface, and can also be consisted by using a widely used interface such as the RS-232C, the USB (universal serial bus), the IEEE1394 and the like. In this case, data other than the MIDI message may be transmitted and received at the same time.

The MIDI device 17 is a device such as an audio-visual device, an electronic musical instrument, a musical tone generator, a sampler etc. which can be connected to the MIDI interface 16. Type of the MIDI device 17 is not limited to the musical keyboard instrument, and it may be a stringed instrument type, a wind instrument type, a percussion instrument type and the like. Moreover, a musical tone generator or an automatic musical performance device, or the like is not limited to that built in a main body of the electronic musical instrument but also can be a combination of independent devices connected via communication means such as MIDI or various networks.

The musical tone generator 18 generates a musical tone signal corresponding to a musical performance signal provided from the MIDI device 17 connected to the MIDI interface 16 or the musical performance switch 22 or the musical contents (music data) stored in the external storage device 15, the ROM 8 or the RAM 7. The musical tone generator supplies the generated musical tone signal to the sound system 20 via the effecter 19.

The effecter 19 adds various musical effects to the musical tone signal supplied from the musical tone generator 18.

The sound system 20 includes a D/A converter and a loudspeaker or loudspeakers and pronounces musical tone after converting the digital musical tone signal to analogue musical tone signal.

Moreover, a type of the musical tone generator 18 may be a wave-memory type, a FM type, a physical model type, a high frequency synthesizing type, the Formant type, an analogue synthesizing system of a combination of a voltage controlled oscillator (VCO), a voltage controlled filter (VCF) and a voltage controlled amplifier (VCA), an analogue simulation type, etc.

Also, the musical tone generator 18 is not only to be consisted by using the dedicated hardware, but also may be consisted of a combination of a digital signal processor (DSP) and a software program or may be a sound card.

Furthermore, a plurality of reproduction channels may be formed by using one musical tone generator by the time division, or a plurality of reproduction channels may be consisted of a plurality of musical tone generators each one of the generators is used for each reproduction channel.

The communication interface 21 can be connected to a communication network 3 such as the LAN (local area network), the Internet, and a telephone line, and the computer 1 and the server 5 can be connected with each other via the communication network 3.

Moreover, the communication interface 21 and the communication network 3 are not only be wired, but also be wireless. Also, both wired and wireless communication interface 21 may be equipped, or a removable PC card, etc. may be used as the communication interface 21.

FIG. 4 is a schematic view showing data contents of the external storage device (HDD) 15 of the server 5 shown in FIG. 3.

In the external storage device (HDD) 15 of the server 5, for example, user information UI, contents data CD, contents management information CM and other data are stored as data for executing the contents data management process according to the embodiment of the present invention.

The user information Ul is information to record a user ID, a user password PW, PC specific information PU, and count information Cl for each user such as a user A, a user B and so on. The user ID is the identification information for specifying the user, and the user password PW is a password corresponding to the user ID and is used when the computer 1 logs in the server 5. The PC specific information PU is information of the computer 1 corresponding to the user ID. The count information Cl includes the contents ID of the contents data downloaded by the user corresponding to the user ID and keeps the information for counting a limit number of permissible transmission for each contents data CD corresponding to each contents ID as a remaining permissible number of transmission (a permissible number of check-out). A permissible number of check-out is used as check-out permission judgment data for judging whether the user can check-out or not for each contents data. Moreover, for example, by keeping a contents data purchase history of each user, it may be used as a check-out permission judgment data. In that case, it is judged whether the user can check-out or not based on whether the user has a usage right of the contents data (for example, whether the user purchased or not). Moreover, data for judging whether the user has a fair usage right to the contents data may be kept as check-out permission judgment data.

A plurality of contents data 1 to n is stored as the contents data CD. Each contents data CD is consisted of the contents ID for specifying the contents data and the real data RD. The real data RD includes at least one of the real data RD consisted of the MIDI data (MIDI), the audio data (AUDIO), the video data (VIDEO), still image data, the music score data and other data.

The contents management information CM is data for regulating usage restriction by a trial version or a regular version of the each contents data CD to be transmitted with the contents data CD to the computer 1. Each contents management information CM stores the contents ID for specifying the contents data and detailed usage restriction SI of the contents. The usage restriction SI is for example, permission or prohibition of printing, recording, editing and the like. Moreover, the contents management information CM may be embedded as a part of the contents data CD (for example, as a security information chunk or a digital watermark).

FIG. 5 is a schematic view showing data contents of the external storage device (HDD) 15 of the computer 1 shown in FIG. 3.

The external storage device (HDD) 15 of the computer 1 stores information such as user authorizing information NI, the contents data CD, the contents management information CM and other information as the data for executing the contents data management program according to the embodiment of the present invention.

The user authorizing information NI is information necessary for receiving user certification at a time of login connecting to the server 5. For example, the user authorizing information NI is consisted by including the user ID, the user password PW and other information. Moreover, the user password PW may be manually input by the user at a time of log-in without recording as the user authorizing information NI.

A plurality of the contents data CD (for example, the trial version of the contents data 1, the regular version of the contents data 3 and the like) downloaded in advance by the user from the server 5 are stored. Each contents data CD is consisted of the contents ID for specifying the contents data and the real data RD. The real data RD includes at least one of the real data RD consisted of, for example, the MIDI data (MIDI), the audio data (AUDIO), the video data (VIDEO), the still image data, the score data and other data.

The contents management information CM is data to regulate the usage restriction of each contents data CD and downloaded with the contents data CD from the computer 1. Each contents management information CM stores the contents ID for specifying the contents data and the detailed usage restriction SI of the contents. The usage restriction SI is usage restriction, for example, permission or prohibition of printing, recording, editing and the like. Moreover, the contents management information CM may be embedded as a part of the contents data CD (for example, as the security information chunk or the digital watermark).

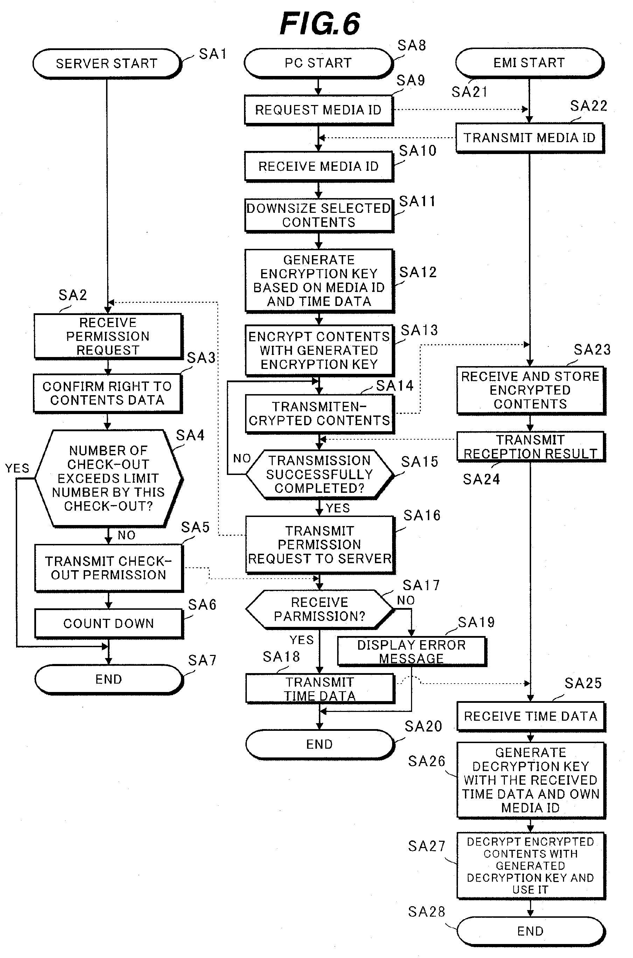

FIG. 6 is a flowchart showing the check-out process according to the embodiment of the present invention. The data flows are indicated with lined arrows in the drawing. Moreover, the server 5 and the computer 1, and the computer 1 and the electronic musical instrument 4 are connected with each other in advance. Steps SA1 to SA7 are processes executed by the server 5, and Steps SA8 to SA20 are processes executed by the computer 1, and Steps SA 21 to SA28 are processes executed by the electronic musical instrument 4 which also functions as a contents using apparatus.

A process on the server 5 starts at Step SA1, and the check-out permission request transmitted from the computer 1 is received at Step SA16. At Step SA3, it is judged whether the contents data CD corresponding to the contents ID included in the received permission request is formally downloaded with the user ID transmitted from the computer 1 that is connected currently, and the usage right of the user is confirmed. When the usage right has confirmed, the process proceeds to the next step. When the usage right cannot be confirmed, the process at this server 5 is terminated because of error.

At Step SA 4, it is judged whether a number of check-out of the contents data CD corresponding to the contents ID exceeds the transmission count limit (the permissible number of check-out) or not. In concrete, for example, the permissible number of check-out of the contents data corresponding to the contents ID is obtained from count information Cl (FIG. 4), and it is judged that the permissible check-out (within the transmission limit count) after the permissible number of check-out will be count down becomes not less than one. When a number of check-out exceeds the transmission limit count, the process proceeds to Step SA7 as indicated with an arrow "YES", and the process at the server 5 is finished. When it is within the transmission limit count, the process proceeds to Step SA5 as indicated with an arrow "NO".

At Step SA5, check-out permission of the contents data CD corresponding to the contents ID included in the received permission request is transmitted to the computer 1. Then, at Step SA6, the permissible number of check-out corresponding to the contents data CD corresponding to the contents ID included in the received permission request in the count information CI (FIG. 4) is counted down, and the process proceeds to Step SA7 to finish the process at the server 5.

At Step SA8, the process at the computer 1 is started, and at Step SA9, transmission of the media ID of the semiconductor memory 15 is requested to the electronic musical instrument 4. At Step SA10, the media ID transmitted from the electronic musical instrument 4 at Step SA22 is received. Moreover, when the media ID cannot be obtained, the check-out process is interrupted.

At Step SA11, the contents data CD to be checked-out is selected, and the selected contents data CD is converted to a format that can be used at the electronic musical instrument 4. This conversion is, for example, down-sizing such as decreasing a data amount of the contents data or the like. The contents data CD is consisted of a plurality of data such as the contents ID and the real data RD (MIDI, AUDIO and the like) as shown in FIG. 5. Since all of the data cannot be used in the electronic musical instrument 4 to which the contents data is transmitted because of performance of the electronic musical instrument 4, one or some types of data that cannot be used in the electronic musical instrument 4 to which the contents data is transmitted is/are omitted at the down sizing process, and the conversion process will be executed to convert the downsized data into a format that can be used in the electronic musical instrument 4. Also, by making the contents data CD include the contents management information at this time, the contents data CD including all necessary data may be formed.

At Step SA12, an encryption key is generated by using the media ID received at Step SA10 and information (for example, the time data including the time information at the time of downsizing process) generated in the computer 1. At Step SA13, the contents data CD converted at Step SA11 is encrypted with the encryption key generated at Step SA12.

At Step SA14, the contents data CD encrypted at Step SA13 is transmitted to the electronic musical instrument 4. When the contents management information is not included in the contents data CD, the contents management information may be transmitted at the same time. At Step SA15, transmission result of the contents data transmitted at the later-described Step SA24 is received, and it is judged whether transmission is completed successfully or not. If the transmission is successfully completed, the process proceeds to Step SA16 indicated with an arrow "YES". If the transmission is failed (not successfully completed), that is, if transmission error arises, the process returns to Step SA14 indicated with an arrow "NO" to retransmit the contents data CD. Moreover, confirmation of the transmission result may be executed by observing generation of the transmission error without waiting a report from the electronic musical instrument 4. Also, when the transmission error arises, the process may be proceeds to Step SA20 without executing retransmission, and the process at the computer 1 may be finished.

At Step SA16, a check-out permission of the contents data CD transmitted to the server 5 at Step SA 14 is requested (transmission of the check-out permission request). At Step SA17, it is judged whether the check-out permission transmitted at Step SA5 is received or not. If the check-out permission is received, the process proceeds to Step SA18 indicated with an arrow "YES". If the check-out permission is not received, the process proceeds to Step SA19 indicated with an arrow "NO", failure of check-out is indicated to finish the process at the computer 1 at Step SA20.

At step SA18, information (for example, time information at that time) generated at the computer 1 that is used when the encryption key is generated at Step SA12 is transmitted to the electronic musical instrument 4. Then, the process at the computer 1 finishes at Step SA20.

At Step SA21, a process at the electronic musical instrument 4 starts. At Step SA22, the media ID of the semiconductor memory 15 is read out in accordance with the transmission request of the media ID at Step SA9 and transmitted to the computer 1.

At Step SA23, the encrypted contents data CD transmitted at Step SA14 is received. The encrypted contents data CD received at this step is stored in the semiconductor memory 15. At Step SA24, reception result of the contents data CD (representing whether the encrypted data CD is received or not) at Step SA24 is transmitted to the computer 1.

At Step SA25, the information generated in the computer 1 that is used when the encryption key is generated at Step SA12 transmitted at Step SA18 is received.

At Step SA26, a decryption key for decrypting the contents data CD is generated by using the information such as the time data received at Step SA25 and the media ID of its own semiconductor memory 15.

At Step SA27, the encrypted contents data CD stored in the semiconductor memory 15 at Step SA23 is decrypted by using the decryption key generated at Step SA26, and it is used in accordance with the usage restriction regulated by the contents data management information. Then, the process proceeds to Step SA28 to finish the process at the electronic musical instrument 4.

As described in the above, in the check-out process of the contents data CD according to the embodiment of the present invention, the contents data is encrypted, and the information for generating the encryption key used for encrypting is transmitted separately from the contents data CD. By doing this, the risk that the contents data is used illegally by a pretending external device can be reduced.

Also, in the check-out process described in the above, the check-out permission of the contents data is requested, and the information for generating the encryption key used for encrypting is transmitted to the electronic musical instrument 4 (contents using apparatus) only when the server 5 permits the check-out. By doing this, the contents data CD transmitted to the electronic musical instrument 4 cannot be decrypted without the check-out permission of the server 5, and it can be prevented that the contents data CD without the permission of the server 5 is checked out to use.

Also, in the check-out process described in the above, since a permissible number of check-out (a limit number of transmission) of the contents data can be managed at the server 5, illegal falsification of the number of transmission limit (the permissible number of check-out) can be prevented, and the contents maker can change the number of transmission limit (the permissible number of check-out). Moreover, since the number of transmission limit (the permissible number of check-out) is updated after confirming the transmission result of the contents data CD, it is prevented that the number of transmission limit (the permissible number of check-out) is decreased when the transmission failed.

As described in the above, in the check-out process according to the embodiment of the present invention, security at a time of check-out of the contents data CD can be reserved. Also, the contents data CD to be checked out can be certainly managed.

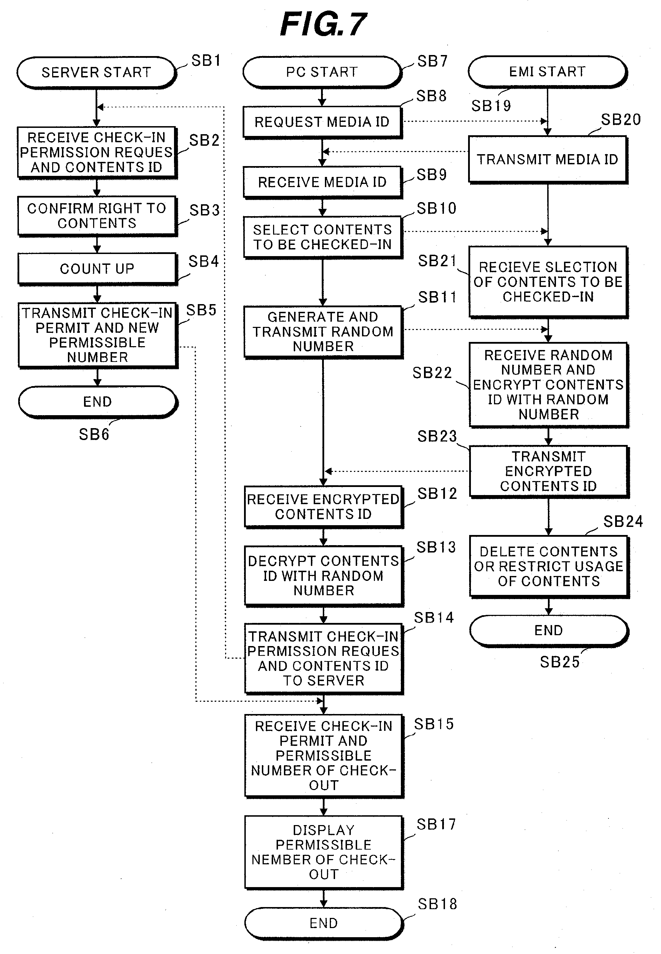

FIG. 7 is a flowchart showing a check-in process according to the embodiment of the present invention. Moreover, the server 5 and the computer 1, and the computer 1 and the electronic musical instrument 4 are connected with each other in advance. Steps SB1 to SB6 are processes at the server 5, the Steps SB7 to SB18 are processes at the computer 1, and Steps SA19 to SA25 are processes at the electronic musical instrument 4 which is also functions as a contents using apparatus.

At Step SB1, a process at the server 5 starts, and at Step SB2, a check-in permission request transmitted from the computer 1 and the contents ID of the contents data CD are received. At Step SB3, it is confirmed whether the contents data CD corresponding to the contents ID included in the received permission request is legally downloaded with the user ID transmitted from the computer 1 connected at the present time, and the usage right of the user is confirmed. When the usage right is confirmed, the process proceeds to the next step SB4. When the usage right cannot be confirmed, the process at this server finishes as an error.

At Step SB4, the permissible number of check-out in the count information Cl (FIG. 4) corresponding to the contents data CD corresponding to the contents ID included in the received permission request is counted up. At Step SB5, the check-in permission and the updated new permissible number of check-out (the permissible number of check-out at the present time) are transmitted to the computer 1. Then, the process proceeds to Step SB6, and the process at the server 5 finishes.

At Step SB7, a process at the computer 1 starts, and transmission of the media ID of the semiconductor memory 15 is requested to the electronic musical instrument 4. At Step SB9, the media ID transmitted from the electronic musical instrument 4 at Step SB20 is received.

At Step SB10, the contents data CD to be checked-in is selected, and the selected contents data CD is informed to the electronic musical instrument 4. Then, at Step SB11, information (for example, the random numbers or the like) generated at the computer 1 is transmitted to the electronic musical instrument 4.

At Step SB12, the encrypted contents ID transmitted from the electronic musical instrument 4 is received, and at Step SB13, the received encrypted contents ID and the random numbers transmitted at Step SB11 are decrypted as the decryption keys. Thereafter at Step SB15, the check-in permission request and the decrypted contents ID are transmitted to the server 5. Moreover, if the received encrypted contents ID cannot be decrypted by using the random numbers transmitted at Step SB11, the process proceeds to Step SB18 to finish the process at the computer 1. By doing this, illegal check-in by a pretending external device other than the electronic musical instrument 4 which transmitted the random numbers at Step SB11 can be prevented.

At Step SB15, the check-in permission and the updated new permissible number of check-out which are transmitted from the server 5 at Step SB5 are received. Then, at Step SB 17, the updated new permissible number of check-out is displayed on the display 14 (FIG. 3). Finally at Step SB18, the process at the computer 1 is finished.

At Step SB19, the process at the electronic musical instrument 4 starts. At Step SB20, the media ID of the semiconductor memory 15 is read out in accordance with the media ID transmission request at Step SB8 and transmitted to the computer 1.

At Step SB21, the selection of the contents data CD to be checked-in by the computer 1 is accepted. At Step SB22, the information (for example, the random numbers or the like) generated in the computer 1 transmitted at Step SB11 is received, and the contents ID of the contents data CD accepted at Step SB21 is encrypted with the received information as an encryption key. At Step SB23, the contents ID encrypted at Step SB22 is transmitted to the computer 1.

At Step SB24, the contents data of which the selection is accepted at Step SB21 is deleted from the semiconductor memory 15. Also, instead of deleting the contents data CD from the semiconductor memory 15, the usage restriction of the contents data CD is changed to make the usage of the contents data invalid. Also, if the contents data is the regular version, it may be changed to provide a trial right that is equivalent to a trial version. Then, the process proceeds to Step SB25 to finish the process at the electronic musical instrument 4.

As described in the above, in the check-out process of the contents data CD according to the embodiment of the present invention, the information for encrypting the contents ID is transmitted from the computer 1 to the electronic musical instrument 4 (the contents using apparatus), and the contents ID is encrypted in the electronic musical instrument 4 based on the received information. By doing this, the risk of a pretending check-in by the pretending external device can be prevented.

Also, in the above-described check-in process, the check-in permission of the contents data CD is requested to the server 5, and the usage right of the contents data CD is confirmed at the server 5. Then, only when the usage right is confirmed, the check-in is permitted, and the permissible number of check-out is updated (count-up).

Also, in the above-described check-in process, since a permissible number of check-out (the limit number of transmission) of the contents data can be managed at the server 5, the illegal falsification of the limit number of the transmission can be prevented, and the contents maker can change the limit number of check-out later.

Moreover, in the above-described embodiment, although the example of the time data is mentioned as the information for encrypting the contents data CD combining with the media ID, it is not limited to that, and it may be any information generated at the computer 1, for example, the random numbers may be used.

Also, however, the example of the random numbers is mentioned as the information for encrypting the contents ID at a time of check-in process, it may be time data representing time, etc.

Moreover, the process of the confirmation of the usage right of the contents data CD in Step SA3 in FIG. 6 and Step SB3 in FIG. 7 may be executed at the computer 1 other than the server 5, and the computer 1 may report that the usage right is confirmed to the server 5.

Also, in the embodiment, although whether check-out is permitted or not is judged based on a number of check-out by the judgment means of the server 5, it may be judged whether check-out is permitted or not, for example, by confirming the usage right of the contents of the user based on the check-out permission judgment data other than the permissible number of check-out without count-up and count-down by the judgment means.

Also, when the permissible number of check-out is one, the number may not be counted down or up. In that case, the check-out permission judgment data may be a flag, that is, a flag "1" when check-out can be permitted and a flag "0" when check-out cannot be permitted are arranged, and the flag is made to be "0" after check-out, and it is made to be "1" after the check-in.

Moreover, the embodiment of the present invention may be executed by a widely used computer or the like which has installed a computer program, etc. for realizing the embodiment.

In that case, the contents data may be provided in a state that the computer programs corresponding to the embodiment is stored in a storage means which the computer can read such as the CD-ROM, the floppy disk, etc.

Moreover, the electronic musical instrument 4 according to the embodiment of the present invention is not limited only to the form of the electronic musical instrument, but also a Karaoke device, a game device, a mobile communication terminal such as a mobile phone and a automatic performance piano may be used.

Furthermore, when the form of the electronic musical instrument is applied to the electronic musical instrument 4, not only the musical keyboard, but also a stringed instrument type, a wind instrument type, a percussion instrument type and the like may be applied. Moreover, a musical tone generator or an automatic musical performance device, etc. is not limited to the one which is built in a main body of the electronic musical instrument but also can be a combination of independent devices connected via communication means such as MIDI or various networks.

The present invention has been described in connection with the preferred embodiments. The invention is not limited only to the above embodiments. It is apparent that various modifications, improvements, combinations, and the like can be made by those skilled in the art.

## Claims

1. A contents data management apparatus, comprising:
a memory that stores contents data;
an encrypting device that encrypts the contents data;
a first transmitter that transmits encrypted contents data to other contents data management apparatus;
a requesting device that requests a check-out permission of the contents data to a server;
a receiver that receives the check-out permission from the server; and
a second transmitter that transmits information for decrypting the encrypted contents data to the other contents management apparatus when the receiver receives the check-out permission.

2. The contents data management apparatus according to claim 1, wherein the contents data management apparatus is a computer, and the other contents management apparatus is a contents data using apparatus.

3. A contents data management apparatus, comprising:
a receiver that receives a check-out permission request for contents data from other contents data management apparatus;
a judgment device that judges whether usage permission of the contents data can be granted or not in accordance with check-out permission judgment data;
a transmitter that transmits the check-out permission for the contents data to the other contents data management apparatus when the judgment device judges the usage permission of the contents data can be granted; and
a manager that updates the check-out permission judgment data when the transmitter transmits the check-out permission.

4. The contents data management apparatus according to claim 3, wherein the contents data management apparatus is a server, and the other contents management apparatus is a computer.

5. A contents data management system formed by communicably connecting a first contents data management apparatus and a second contents data management apparatus, the system comprising:
the first contents data management apparatus comprising a first memory that stores contents data, an encrypting device that encrypts the contents data, a first transmitter that transmits encrypted contents data to the second contents data management apparatus, a requesting device that requests a check-out permission of the contents data to a server, a receiver that receives the check-out permission from the server, and a second transmitter that transmits information for decrypting the encrypted contents data to the second contents management apparatus when the receiver receives the check-out permission; and
the second contents data management apparatus comprising a third receiver that receives the encrypted contents data; a second memory that stores the received encrypted contents data, a fourth receiver that receives the information for decrypting the encrypted contents data, a decrypting device that decrypts the stored encrypted contents data by using the received information for decrypting the encrypted contents data.

6. The contents data management system according to claim 5, wherein the first contents data management apparatus is a computer, and the second contents management apparatus is a contents data using apparatus.

7. A contents data management apparatus, comprising:
a transmitter that transmits encryption information for encrypting contents data identification information of contents data stored in other contents management apparatus to the other contents management apparatus;
a first receiver that receives contents data identification information encrypted by using the transmitted encryption information from the other contents data management apparatus;
an decrypting device that decrypts the received encrypted contents data identification information by using the transmitted encryption information; and
a requesting device that transmits a check-in permission and information for specifying the contents data in accordance with the decrypted contents data identification information to a server.

8. The contents data management apparatus according to claim 7, further comprising a second receiver that receives a check-in permission for the contents data and a permissible number of check-out of the contents data from the server.

9. The contents data management apparatus according to claim 7, wherein the encryption information is a random number.

10. The contents data management apparatus according to claim 7, wherein the contents data management apparatus is a computer, and the other contents management apparatus is a contents data using apparatus.

11. A contents data management apparatus, comprising:
a memory that stores contents data including contents data identification information;
a receiver that receives encryption information for encrypting the contents data identification information from other contents management apparatus;
an encrypting device that encrypts the contents data identification information by using the received encryption information;
a transmitter that transmits the encrypted contents data identification information to the other contents management apparatus; and
a controller that deletes or restricts a usage of the contents data corresponding to the encrypted contents data identification information after completion of the transmission of the encrypted contents data identification information.

12. The contents data management apparatus according to claim 11, wherein the encryption information is a random number.

13. The contents data management apparatus according to claim 11, wherein the contents data management apparatus is a contents data using apparatus, and the other contents management apparatus is a computer.

14. A contents data management apparatus, comprising:
a receiver that receives contents data identification information and a check-in permission request for contents data corresponding to the contents data identification information from other contents data management apparatus;
a judgment device that judges whether check-in of the contents data corresponding to the contents data identification information can be permitted or not; and
a transmitter that transmits a check-in permission to the other contents data management apparatus when the check-in of the contents data corresponding to the contents data identification information is judged to be permitted.

15. The contents data management apparatus according to claim 14, wherein the judgment device judges whether check-in of the contents data corresponding to the contents data identification information can be permitted or not in accordance with a permissible number of check-out or check-out permission judgment data other than the permissible number of check-out.

16. The contents data management apparatus according to claim 14, further comprising a manager that updates a permissible number of check-out, and wherein the transmitter transmits the updated permissible number of check-out in addition to the check-in permission to the other contents data management apparatus.

17. The contents data management apparatus according to claim 14, wherein the contents data management apparatus is a server, and the other contents data management apparatus is a computer.

18. A storage medium storing a program, which a computer executes to realize a contents data management process, comprising the instructions for:
(a) reading contents data from a memory;
(b) encrypting the contents data;
(c) transmitting encrypted contents data to other contents data management apparatus;
(d) requesting a check-out permission of the contents data to a server;
(e) receiving the check-out permission from the server; and
(f) transmitting information for decrypting the encrypted contents data to the other contents management apparatus when the check-out permission is received.

19. A storage medium storing a program, which a computer executes to realize a contents data management process, comprising the instructions for:
(a) receiving a check-out permission request for contents data from other contents data management apparatus;
(b) judging whether usage permission of the contents data can be granted or not in accordance with check-out permission judgment data;
(c) transmitting the check-out permission for the contents data to the other contents data management apparatus when the usage permission of the contents data is judged to be granted; and
(d) updating the check-out permission judgment data when the check-out permission is transmitted.

20. A storage medium storing a program, which a contents data management system formed by communicably connecting a first contents data management apparatus and a second contents data management apparatus executes to realize a contents data management process, comprising the instructions for:
(a) reading contents data;
(b) encrypting the contents data;
(c) transmitting encrypted contents data to the second contents data management apparatus;
(d) requesting a check-out permission of the contents data to a server;
(e) receiving the check-out permission from the server;
(f) transmitting information for decrypting the encrypted contents data to the second contents management apparatus when the check-out permission is received;
(g) receiving the encrypted contents data;
(h) storing the received encrypted contents data;
(i) receiving the information for decrypting the encrypted contents data; and
(j) decrypting the stored encrypted contents data by using the received information for decrypting the encrypted contents data, wherein
the instructions (a) to (f) are executed by the first contents data management apparatus, and the instructions (g) to (j) are executed by the second contents data management apparatus.

21. A storage medium storing a program, which a computer executes to realize a contents data management process, comprising the instructions for:
(a) transmitting encryption information for encrypting contents data identification information of contents data stored in other contents management apparatus to the other contents management apparatus;
(b) receiving contents data identification information encrypted by using the transmitted encryption information from the other contents data management apparatus;
(c) decrypting the received encrypted contents data identification information by using the transmitted encryption information; and
(d) transmitting a check-in permission and information for specifying the contents data in accordance with the decrypted contents data identification information to a server.

22. A storage medium storing a program, which a computer executes to realize a contents data management process, comprising the instructions for:
(a) receiving encryption information for encrypting contents data identification information included in contents data stored in a memory from other contents management apparatus;
(b) encrypting the contents data identification information by using the received encryption information;
(c) transmitting the encrypted contents data identification information to the other contents management apparatus; and
(d) deleting or restricting a usage of the contents data corresponding to the encrypted contents data identification information after completion of the transmission of the encrypted contents data identification information.

23. A storage medium storing a program, which a computer executes to realize a contents data management process, comprising the instructions for:
(a) receiving contents data identification information and a check-in permission request for contents data corresponding to the contents data identification information from other contents data management apparatus;
(b) judging whether check-in of the contents data corresponding to the contents data identification information can be permitted or not; and
(c) transmitting a check-in permission to the other contents data management apparatus when the check-in of the contents data corresponding to the contents data identification information is judged to be permitted.
